# EUROPÄISCHE PATENTSCHRIFT

(11) **EP 1 506 826 B1**
(45) Veröffentlichungstag und Bekanntmachung des Hinweises auf die Patenterteilung: **09.12.2009**
(21) Anmeldenummer: 04016526.8
(22) Anmeldetag: 14.07.2004
(51) Int. Cl.: B22D 11/055

(54) **Stranggiesskokille**
Continuous casting mould
Lingotière pour la coulée continue

(30) Priorität: 13.08.2003 DE 10337205
(43) Veröffentlichungstag der Anmeldung: 16.02.2005
(73) Patentinhaber: KME Germany AG & Co. KG, 49074 Osnabrück (DE)
(72) Erfinder: Wobker, Hans-Günter, Dr., 49565 Bramsche (DE); Kolbeck, Dietmar, 49439 Steinfeld (DE); Hugenschütt, Gerhard, 49191 Bramsche (DE)

(56) Entgegenhaltungen:
- DE-A- 4 127 333
- US-A1- 2003 106 681
- PATENT ABSTRACTS OF JAPAN Bd. 1999, Nr. 13, 30. November 1999 (1999-11-30) -& JP 11 207442 A (SUMITOMO HEAVY IND LTD; SUMITOMO METAL IND LTD), 3. August 1999 (1999-08-03)

## Beschreibung

Die Erfindung betrifft eine flüssigkeitsgekühlte Kokille für eine Stranggiessanlage gemäss den Merkmalen im Oberbegriff von Patentanspruch 1.

Kokillen werden zur Herstellung von Vollprofilen in einem kontinuierlichen Giessprozess verwendet. Die Kokille ist eines der wichtigsten Bauteile einer Stranggiessanlage. In ihr beginnt die Erstarrung der Schmelze. Der prinzipielle Aufbau besteht aus einer äusseren Stahlkonstruktion und dem eigentlichen formgebenden Teil der Kokille, dem Kokillenkörper. Der Kokillenkörper besteht heute fast ausschliesslich aus Kupfer oder einer Kupferlegierung. Für Anwendungen, bei denen hohe bis höchste thermische Beanspruchungen auftreten, werden CuAg- oder CuCrZr-Werkstoffe eingesetzt.

Kokillen sollen dem schmelzflüssigen Metall Wärme entziehen und über die anfangs erfolgende Strangschalenbildung eine Durcherstarrung des Strangs ermöglichen. Beim Giessprozess müssen insbesondere im Giessspiegelbereich des Kokillenkörpers hohe Wärmemengen aus der Schmelze abgeführt werden. Vor allem bei hohen Giessgeschwindigkeiten besteht die Gefahr, dass dabei lokal die zulässige thermische Belastung des Kokillenwerkstoffs überschritten wird. Aus diesem Grunde wird der Kokillenkörper gekühlt. Hierbei wird eine möglichst gute und homogene Kühlung der Giessseite des Kokillenkörpers angestrebt.

Durch die DE 41 27 333 C2 zählt eine Stranggiesskokille zum Stand der Technik, deren Formwände mit sich von oben nach unten erstreckenden, an einen Kühlwasserkreislauf angeschlossenen durchgehend zylindrischen Kühlbohrungen versehen sind.

Die Querschnittsflächen der Kühlbohrungen sind im Bereich der höchsten Temperaturbelastung teilweise durch Verdrängerstäbe verkleinert, um so die Durchflussgeschwindigkeit des Kühlwassers zu erhöhen. Hierdurch soll die Wärmeableitung im Bereich der höchsten Temperaturbelastung verbessert und die Wandtemperatur verringert werden.

Um dem insbesondere an den Breitseitenwänden des Kokillenkörpers lokal auftretenden, höheren Wärmeeintrag auch eine höhere Kühlwirkung entgegenzusetzen, wird in der EP 0 931 609 A1 vorgeschlagen, die Kühlbohrungen bereichsweise enger anzuordnen. Dies hat zur Folge, dass über die gesamte Höhe der Kokille eine erhöhte Kühlwirkung entsteht.

Die Forderung, eine auf bestimmte Zonen der Kokille, z.B. dem Giessspiegel angepasste Kühlwirkung einzustellen, kann jedoch nur eingeschränkt erreicht werden.

Aus dem Stand der Technik ist es auch bekannt, den Abstand der Kühlmittelkanäle von der Heißseite der Kokille zu variieren, um ein angepasstes Kühlverhalten zu erreichen. In der JP 11 207442 A wird diesbezüglich vorgeschlagen Kühlmittelkanäle von der Rückseite der Kokillenplatte her einzufräsen, wobei die Tiefe des Nutgrundes variiert. Die Kühlmittelkanäle werden zur Rückseite hin über Verschlussstücke verschlossen, bei welcher auch die Querschnittsfläche der Kühlmittelkanäle verändert werden kann, so dass nicht nur der Abstand der Kühlmittelkanäle von der Heißseite, sondern auch der Querschnitt der Kühlmittelkanäle variiert werden kann.

In der DE 41 31 829 A1 werden zur Rückseite hin offene Kühlmittelkanäle mit in der Tiefe variierendem Querschnitt vorgeschlagen. Hierbei ändert sich jedoch die Strömungsgeschwindigkeit der Kühlflüssigkeit mit zunehmender Nuttiefe, da die Kühlmittelkanäle nicht durch zusätzliche Passstücke verschlossen werden sollen.

Der Erfindung liegt die Aufgabe zu Grunde, eine flüssigkeitsgekühlte Kokille aufzuzeigen, die mittels eines kostengünstigen Fertigungsverfahrens herstellbar ist und bei welcher die Kühlmittelkanäle mit variierenden Abständen zur Heißseite verlaufen.

Eine erste Lösung dieser Aufgabe besteht nach der Erfindung in einer Kokille gemäss den Merkmalen von Patentanspruch 1.

Kerngedanke der Erfindung bildet die Massnahme, die Kühlkanäle gezielt in den Zonen hoher thermischer Belastung näher an die Giessfläche heranzuführen, und zwar indem die Kühlkanäle als Bohrungen ausgeführt sind. Demzufolge besitzt zumindest ein Kühlkanal zwei Längenabschnitte, wobei die Längenabschnitte relativ zueinander eine voneinander verschiedene Ausrichtung ihrer Längsachsen aufweisen.

Auf diese Weise wird der horizontale Abstand des Kühlkanals zur Giessfläche, also zur Innenwand des Kokillenkörpers variiert und eine an das Belastungsprofil der Kokille angepasste Kühlleistung erreicht. Durch die entsprechende Einstellung des Winkels der Längsachsen der Längenabschnitte bzw. der Steigung der Längenabschnitte kann eine gezielte belastungsgerechte Anpassung der Kühlwirkung auf die entsprechende Zone vorgenommen werden.

Das Kühlmittel wird durch die Kühlkanäle geführt und gelangt in den Heisszonen näher an die Giessfläche heran. Oberhalb und unterhalb der Heisszone nimmt der Abstand der Kühlkanäle zur Heisszone kontinuierlich zu. Dadurch wird nicht nur die Belastung im heissen Höhenbereich des Giessspiegels erheblich herabgesetzt, sondern auch die Wärmebelastung über die gesamte Höhe der Kokille vergleichmässigt.

Durch die erfindungsgemäss vorgeschlagene angepasste Zonenkühlwirkung wird zudem sichergestellt, dass in den thermisch hoch belasteten Bereichen der Kokille die Rekristallisationstemperatur des Kupfers auf der Heissseite nicht erreicht wird. Auch eine Verdampfung des Kühlmittels auf der Kaltseite wird vermieden.

Grundsätzlich können alle Kanäle mit abgewinkelten Längsachsen ausgeführt sein. Selbstverständlich ist auch eine Kombination von einzelnen oder zu Gruppen zusammengefassten Kühlkanälen mit geradem und/oder abgewinkeltem Verlauf möglich.

Je nach Ausführungsform und Anwendungsfall der Kokille können die Längenabschnitte eines Kühlkanals gleich lang (Patentanspruch 2) oder unterschiedlich lang (Patentanspruch 3) ausgeführt sein.

Da bei Plattenkokillen insbesondere die Breitseitenwände des Kokillenkörpers lokal thermisch hoch belastet sind, sind nach Patentanspruch 4 die Kühlkanäle vorzugsweise in den Breitseitenwänden vorgesehen.

Eine besonders vorteilhafte Ausgestaltung einer erfindungsgemässen Kokille ist in den Merkmalen von Patentanspruch 5 zu sehen. Hierbei variiert nicht nur der Längsverlauf der Kühlkanäle, sondern zudem auch deren Abstand zueinander. Hierdurch ist eine dreidimensionale Variation der Kühlleistung der Kokille möglich.

Demzufolge kann die Kühlintensität gesteigert und in den thermisch hoch belasteten Zonen vergleichmässigt werden.

Es versteht sich, dass die erfindungsgemässe Ausgestaltung der Kühlkanäle für unterschiedlichste Arten von Kokillen geeignet ist, also beispielsweise für Plattenkokillen, Rohrkokillen oder Beam Blanks.

Die Erfindung ist nachfolgend anhand von in den Zeichnungen dargestellten Ausführungsbeispielen näher beschrieben. Es zeigen:
- Figur 1: in technisch vereinfachter Darstellung einen Kokillenkörper im vertikalen Schnitt;
- Figur 2: eine Draufsicht auf einen Kokillenkörper und
- Figur 3: eine Seitenansicht auf eine Kokillenwand mit der Darstellung von zwei verschiedenen Kühlkanälen.

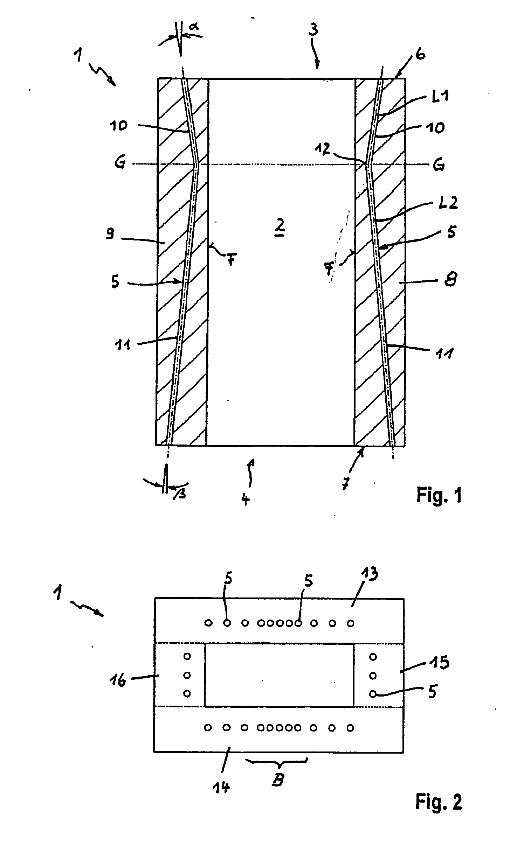

Die Figur 1 veranschaulicht vereinfacht einen Kokillenkörper 1 zum Stranggiessen von Stahl. Die Darstellung ist nicht massstäblich zu verstehen.

Der Kokillenkörper 1 besteht aus einer Kupferlegierung und besitzt einen inneren Formraum 2, dessen Querschnitt am eingiessseitigen Stirnende 3 üblicherweise grösser als am strangausgiessseitigen Fussende 4 bemessen ist.

Zur Kühlung des Kokillenkörpers 1 sind Kühlkanäle 5 vorgesehen, die von dessen Oberseite 6 bis zur Unterseite 7 in den Seitenwänden 8, 9 verlaufen.

Die Kühlkanäle 5 sind durch Bohrungen gebildet und weisen jeweils zwei Längenabschnitte 10, 11 mit voneinander verschieden ausgerichteten Längsachsen L1, L2 auf. Der Längenabschnitt 10 ist von der Oberseite 6 ausgehend mit einem Winkel alpha gegenüber der Vertikalen zum Formraum 2 hin gerichtet und erreicht im Bereich des Giessspiegels G seine nächste Lage relativ zum Formraum 2. Der Längenabschnitt 11 erstreckt sich als Bohrung von der Unterseite 7 ausgehend mit einem Winkel beta zum Formraum 2 hin angestellt und trifft den Längenabschnitt 10 im Bereich des Giessspiegels G. Der Kühlkanal 5 weist somit im Bereich des Giessspiegels G einen Wendepunkt mit einem Knick 12 auf.

Durch den schrägen Verlauf der Längenabschnitte 10, 11 ändert sich der horizontale Abstand des Kühlkanals 5 relativ zur Giessfläche F im Formraum 2 über die Höhe des Kokillenkörpers 1.

Auf diese Weise wird die Kühlwirkung im Kokillenkörper 1 den aufgeprägten thermischen Belastungen entsprechend angepasst.

Bei dem Kokillenkörper 1 kann es sich um einen Plattenkokillenkörper oder um einen Rohrkokillenkörper handeln. In der Figur 2 ist dies durch eine unterschiedlich starke Strichführung angedeutet. Ein Plattenkokillenkörper weist zwei einander gegenüber liegende Breitseitenwände 13, 14 und zwei die Strangbreite begrenzende Schmalseitenwände 15, 16 auf. Ein Rohrkokillenkörper ist aus einem Block gefertigt. Die in der Figur 2 durch gestrichelte Linien angedeutete Teilung zwischen den Breitseitenwänden 13, 14 und den Schmalseitenwänden 15, 16 ist bei einem Rohrkokillenkörper nicht vorhanden.

Wie die Figur 2 zeigt, sind in den Breitseitenwänden 13, 14 Kühlkanäle 5 angeordnet. Diese sind, wie zuvor beschrieben, abgewinkelt ausgeführt. Darüber hinaus sind auch in den Schmalseitenwänden 15, 16 Kühlkanäle 5 vorgesehen. Grundsätzlich können neben den abgewinkelten Kühlkanälen 5 auch geradlinig ausgeführte Kühlkanäle vorgesehen sein.

In der Figur 2 ferner zu erkennen ist, dass der Abstand benachbarter Kühlkanäle 5 in den Breitseitenwänden 13, 14 variiert. In thermisch und mechanisch höher beanspruchten Bereichen B sind die Kühlkanäle 5 enger zueinander angeordnet.

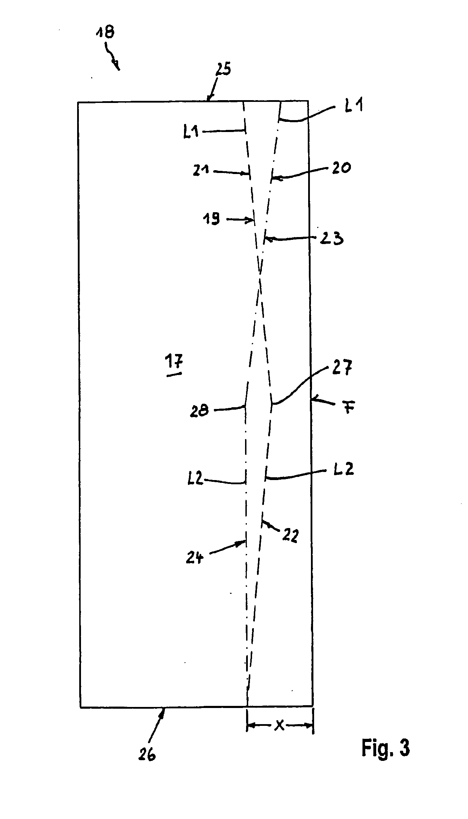

Figur 3 zeigt eine Ansicht auf eine Kokillenwand 17 eines Kokillenkörpers 18 mit der Darstellung von zwei verschiedenen Verläufen von Kühlkanälen 19, 20. Der Kühlkanal 19 ist durch eine gestrichelte Linie und der Kühlkanal 20 durch eine strichpunktierte Linie schematisch angedeutet.

Jeder Kühlkanal 19 bzw. 20 besitzt zwei Längenabschnitte 21, 22 bzw. 23, 24 mit zueinander verschieden ausgerichteten Längsachsen L1 und L2. Hierdurch variiert der Abstand x der Kühlkanäle 19, 20 relativ zur Giessfläche F über den vertikalen Verlauf. Der Längenabschnitt 21 des Kühlkanals 19 ist von der Oberseite 25 der Kokillenwand 17 ausgehend zur Giessfläche F hin gerichtet. Der Längenabschnitt 22 erstreckt sich von der Unterseite 26 der Kokillenwand 17 ausgehend in Richtung zur Giessfläche F. Die Längenabschnitte 21 und 22 treffen sich im Knick 27.

Bei dem Kühlkanal 20 verläuft der Längenabschnitt 23 von der Oberseite 25 ausgehend abwärts gerichtet von der Giessfläche F weg, bis er im etwa mittleren Höhenbereich der

Kokillenwand 17 den Längenabschnitt 24 im Knick 28 trifft. Der Längenabschnitt 24 seinerseits läuft vertikal ausgerichtet parallel zur Giessfläche F nach unten.

Durch die Variation des Längsverlaufs der Kühlkanäle 5 bzw. 19, 20, wie zuvor beschrieben, kann eine gezielte belastungsgerechte Anpassung der Kühlwirkung auf thermisch und mechanisch hoch belastete Zonen eingestellt werden. Die Kühlintensität kann ferner in den hoch belasteten Zonen gesteigert werden, indem dort der Abstand der Kühlkanäle 5, 18, 19 relativ zueinander enger gewählt wird.

Ingesamt lässt sich bei der erfindungsgemäss vorgeschlagenen Kokille eine dreidimensionale Variation der Kühlleistung erreichen.

### Bezugszeichenaufstellung

1 - Kokillenkörper
2 - Formraum
3 - Stirnende
4 - Fußende
5 - Kühlkanal
6 - Oberseite v. 1
7 - Unterseite v. 1
8 - Seitenwand
9 - Seitenwand
10 - Längenabschnitt
11 - Längenabschnitt
12 - Knick
13 - Breitseitenwand
14 - Breitseitenwand
15 - Schmalseitenwand
16 - Schmalseitenwand
17 - Kokillenwand
18 - Kokillenkörper
19 - Kühlkanal
20 - Kühlkanal
21 - Längenabschnitt v. 18
22 - Längenabschnitt v. 18
23 - Längenabschnitt v. 19
24 - Längenabschnitt v. 19
25 - Oberseite
26 - Unterseite
27 - Knick
28 - Knick
L1 - Längsachse v. 10, 21 oder 23
L2 - Längsachse v. 11, 22 oder 24
α - Winkel
β - Winkel
B - Bereich
F - Gießfläche
G - Gießspiegel
X - Abstand

## Patentansprüche

1. Flüssigkeitsgekühlte Kokille für eine Stranggiessanlage mit einem formgebenden Kokillenkörper (1, 18) aus einem Material hoher Wärmeleitfähigkeit, wie Kupfer oder einer Kupferlegierung, wobei im Kokillenkörper (1, 18) erstreckende Kühlkanäle (5, 19, 20) vorgesehen sind, wobei zumindest ein Kühlkanal (5, 19, 20) zwei Längenabschnitte (10, 11; 21, 22; 23, 24) besitzt und die Längenabschnitte (10, 11; 21, 22; 23, 24) eine voneinander verschiedene Ausrichtung ihrer Längsachsen (L1, L2) aufweisen, wobei der Abstand des Kühlkanals (5, 19, 20) zur Giessfläche (F) im Kokillenkörper (1, 18) variiert, **dadurch gekennzeichnet, dass** die Kühlkanäle (5, 19, 20, 30) durch Bohrungen gebildet sind, die sich von der Oberseite (6, 25) zur Unterseite (7, 26) des Kokillenkörpers (1, 18) erstrecken.

2. Kokille nach Anspruch 1, **dadurch gekennzeichnet, dass** die Längenabschnitte gleich lang sind.

3. Kokille nach Anspruch 1, **dadurch gekennzeichnet, dass** die Längenabschnitte unterschiedlich lang sind.

4. Kokille nach einem der Ansprüche 1 bis 3, wobei der Kokillenkörper zwei einander gegenüberliegende Breitseitenwände (13, 14) und zwei die Strangbreite begrenzende Schmalseitenwände (15, 16) aufweist, **dadurch gekennzeichnet, dass** die Kühlkanäle (5) in den Breitseitenwänden (13, 14) angeordnet sind.

5. Kokille nach einem der Ansprüche 1 bis 4, **dadurch gekennzeichnet, dass** der Abstand benachbarter Kühlkanäle (5, 30) variiert.

## Claims

1. Liquid-cooled mould for a continuous casting system with a shaping mould body (1, 18) made of a material with high heat conductivity, such as copper or a copper alloy, wherein cooling channels (5, 19, 20) extending in the mould body (1, 18) are provided, wherein at least one cooling channel (5, 19, 20) has two longitudinal portions (10, 11; 21, 22; 23, 24) and the longitudinal portions (10, 11; 21, 22; 23, 24) have orientations of their longitudinal axes (L1, L2) which are different from one another, wherein the spacing of the cooling channel (5, 19, 20) from the casting face (F) in the mould body (1, 18) varies, **characterised in that** the cooling channels (5, 19, 20, 30) are formed by bores, which extend from the upper side (6, 25) to the lower side (7, 26) of the mould body (1, 18).

2. Mould according to claim 1, **characterised in that** the longitudinal portions are of equal length.

3. Mould according to claim 1, **characterised in that** the longitudinal portions have different lengths.

4. Mould according to any one of claims 1 to 3, wherein the mould body has two mutually opposing broad side walls (13, 14) and two narrow side walls (15, 16) delimiting the strand width, **characterised in that** the cooling channels (5) are arranged in the broad side walls (13, 14).

5. Mould according to any one of claims 1 to 4, **characterised in that** the spacing of adjacent cooling channels (5, 30) varies.

## Revendications

1. Lingotière de coulée en continu, refroidie par du liquide, ayant un corps de lingotière (1, 18) donnant la forme, ce corps étant en un matériau à forte capacité calorifique tel que du cuivre ou un alliage de cuivre,
- des canaux de refroidissement (5, 19, 20) s'étendant dans le corps de lingotière (1, 18),
- au moins un canal de refroidissement (5, 19, 20) ayant deux segments longitudinaux (10, 11; 21, 22; 23, 24) et ces segments longitudinaux (10, 11; 21, 22; 23, 24) ayant chacun un axe longitudinal (L1, L2) d'alignement différent,
- la distance entre le canal de refroidissement (5, 19, 20) et la surface de coulée (F) dans le corps de lingotière (1, 18) étant variable,
**caractérisée en ce que**
les canaux de refroidissement (5, 19, 20, 30) sont des perçages partant du côté supérieur (6, 25) tout en se dirigeant vers le côté inférieur (7, 26) du corps de lingotière (1, 18).

2. Lingotière selon la revendication 1,
**caractérisée en ce que**
les segments longitudinaux ont la même longueur.

3. Lingotière selon la revendication 1,
**caractérisée en ce que**
les segments longitudinaux ont des longueurs différentes.

4. Lingotière selon les revendications 1 à 3,
selon laquelle le corps de lingotière comporte deux parois de grands côtés (13, 14) qui se font face et deux parois de petits côtés (15, 16) délimitant la largeur de la coulée,
**caractérisée en ce que**
les canaux de refroidissement (5) sont prévus dans les parois des grands côtés (13, 14).

5. Lingotière selon les revendications 1 à 4,
**caractérisée en ce que**
la distance entre les canaux de refroidissement (5, 30) est variable.
